# EUROPEAN PATENT SPECIFICATION

(11) **EP 1 098 749 B1**
(45) Date of publication and mention of the grant of the patent: **02.05.2003**
(21) Application number: 99932691.1
(22) Date of filing: 16.07.1999
(51) Int. Cl.: B29C 51/38, B29C 51/30

(54) **TRAILER TO BE COUPLED TO A VEHICLE**
AN EIN FAHRZEUG ANKUPPELBARER ANHÄNGER
REMORQUE A RATTACHER A UN VEHICULE

(30) Priority: 17.07.1998 DK 95298
(43) Date of publication of application: 16.05.2001
(73) Proprietor: Pedersen, John, 5250 Odense (DK)
(72) Inventor: Pedersen, John, 5250 Odense (DK)
(74) Representative: Nielsen, Leif
(86) International application number: DK9900410
(87) International publication number: WO00006366

(56) References cited:
- EP-A1- 0 102 777
- EP-A1- 0 670 257
- WO-A1-92/17350
- WO-A1-96/12638
- WO-A1-97/04945
- WO-A1-99/16657
- WO-A1-99/16660
- GB-A- 2 195 285
- US-A- 3 084 973
- US-A- 3 421 184

## Description

The present invention concerns trailers or camping caravans which are to be coupled to a towing vehicle.

Such trailers/caravans are well-known and are mass produced, and are built following quite traditional construction methods and design. Normally, the construction of such a trailer consists of a chassis built up of metal profiles on which some form or another of superstructure is placed, e.g. an open/closed bed for use in the transport of articles, goods or livestock, or in certain cases a shed or a cabin consisting of an insulated bottom-, wall- and ceiling-plates, so that the cabin can be used for habitation, as a sales- vehicle or for similar purposes.

Under the chassis there are mounted axles, wheels, brakes and equipment with which the trailer can be towed etc. The construction is configured in such a manner that it is the chassis which is the supporting part of the trailer. In addition to being self-supporting, the chassis must thus also support the superstructure which is chosen to be placed on the trailer, and that load which is placed on/in the superstructure. This means that with the known methods of construction, the result is generally a construction with relatively great weight in relation to the load-carrying capacity, in that as rule there are certain limitations on the total weight.

Moreover, the known trailers are composed of a number of different materials, such as iron, steel, aluminium, wood, sheets of wood-fibre and plastic, possibly insulated with foam of various kinds, rubber and diverse screws, bolts, rivets etc. These materials react differently to variations in temperature, moisture and wear, and their corrosive characteristics are very different, and herewith also their lifetime and the lifetime of the trailer. Moreover, the construction of the known trailers with said materials involves many working operations, and also up to several different trade groups in connection with the assembly.

Furthermore, the existence of the many different materials in the construction calls for a great deal of maintenance of various kinds, and moreover it will be difficult to undertake renewal of the appearance and construction of such trailers while using traditional materials and concepts.

Attempts to achieve a certain degree of freedom with regard to the construction of trailers have resulted in the superstructures for trailers being configured as units moulded in one piece, for example as sandwich-built units consisting of an external and an internal plate construction, between which an insulating foam material is placed for the insulation of the superstructure. An example of this is disclosed in EP-0061919-A2, which shows a trailer floor moulded in one piece, consisting of glass-fibre reinforced plastic with a core of polyurethane foam, and comprising an under-frame in the form of longitudinal beams for the strengthening of the floor. However, it is not disclosed how the floor of the trailer is supported on wheels for mobility, which means that it must be assumed that this construction is configured to be placed on a chassis of traditional construction.

EP-0102777-A1 discloses an example of an integrally-moulded construction of a supporting truck bed which is built up of glass-fibre reinforced plastic filled with foamed plastic material, but also this is intended for mounting on a traditional chassis with wheels, brakes etc.

The above-mentioned publications are all examples of constructions of self-supporting superstructures which for transport are suitable for mounting on a traditional chassis supported by wheels, and provided with brakes, towing equipment etc., and where the object is to provide a quick changeover capability in connection with the use of a standard chassis with different types of superstructures, and hence with the subsequent disadvantages in the form of relatively great weight, corrosion etc.

DK patent application 0603/91 discloses a sales vehicle which has a car-bed moulded substantially in one piece in a self-supporting sandwich construction of at least two layers of glass-fibre reinforced plastic with at least one intermediate layer of plastic.

However, in the cases where the sales vehicle is mobile, its construction comprises an integrated axle shaft of metal, and a tow bar, similarly of metal, and consequently with the above-mentioned disadvantages.

With the invention, however, it has been realised that the above-mentioned disadvantages with trailers of the disclosed type can be overcome with a construction where the superstructure, chassis and tow-bar/triangle consist of one and the same self-supporting construction of composite materials, comprising external shells between which a core of suitable core material is disposed.

Considerable advantages are achieved hereby, including a reduction in the weight of up to 50%, which provides greater loading capacity and herewith fewer transports and reduced driving (lower fuel consumption). Moreover, considerable advantages are achieved with regard to the shape of the trailer, so that the wind resistance can be reduced. Furthermore, the said materials do not corrode, which means that the lifetime of the trailer is increased to a considerable degree, and herewith also the resale value of the trailer.

With the construction of the trailer according to the invention without an independently built-up chassis, the possibility is also provided for a completely free configuration of the trailer, in that both supporting and non-supporting parts of the trailer are built up of materials which belong to the same family, which means that the characteristics of the materials can be utilised in an optimum manner in connection with construction strength and shape. It is thus possible to produce trailers with an external design which matches the cars from different manufacturers, and which further satisfy various customer requirements regarding design.

WO92/17350 discloses a mobile stall and a message for the production of the body of a mobile stall. The body of the mobile stall is essentially formed as a unit being a self-supporting sandwich product of at least 2 glas-fibre reinforce plastic sheets having at least one intermediate cellular plastic core. Substantially reduction in the amount of components in work operation is achieved when compared with traditional frame constructions. However there is not disclosed anything concerning a tow-bar or such construction for the coupling of the mobile stall to a towing vehicle.

US-A-3084973 discloses a trailer body as simply, with the body shell includes a upper shell section and a lower shell section to be assembled to form the body shell of a house trailer. On the bottom of the lower shell section is mounted a frame axel, and to reinforcement of the shell section settable material filled in to the cavity between the floor structure and the bottom of the lower shell section. However the body shell is made mobile by mounting it on a traditionally wheeled A-frame made of steel.

With the view to achieving a lower centre of gravity for the trailer according to the invention, the wheel suspensions can consist of a through-going axle which is an integrated part of the construction of the self-supporting bed.

There is hereby achieved greater stability when driving with the trailer, and lower costs in the form of energy consumption during transport as a consequence of the lower wind resistance. A further advantage achieved with this configuration is that the wheel suspensions constitute a reinforcement of the loading capacity of the bed of the trailer.

The through-going axle can with advantage also consist of a rubber torsion-bar suspension axle, whereby there is achieved a further lowering of the centre of gravity of the trailers/caravans which require a suspension system.

Out of regard for a reduction of the weight of the trailer, the through-going axle or the rubber torsion-bar suspension axle can with advantage consist of a tube made of an extruded composite material. This provides the further advantage that use is made of an axle material which has the same material characteristics as the remaining part of the trailer, which reduces stresses in the construction under conditions of varying temperature.

Out of regard for the prevention of corrosion in cables etc. in connection with brakes, the trailer can further comprise rod connections configured in suitable composite materials and led through channels, similarly configured in suitable composite material, between the coupling link and brake mechanism.

In the following, the invention will be explained in more detail with reference to the drawing, where
- fig. 1: is a side view of a trailer according to the invention,
- fig. 2: is an end section view of the trailer shown in fig. 1,
- fig. 3: is the same seen from above,
- fig. 4: shows a section of the bed of the trailer in detail and showing an axle support moulded into the sandwich construction of the bed,
- fig. 5: shows the details of an axle suspension with rubber torsion springs.

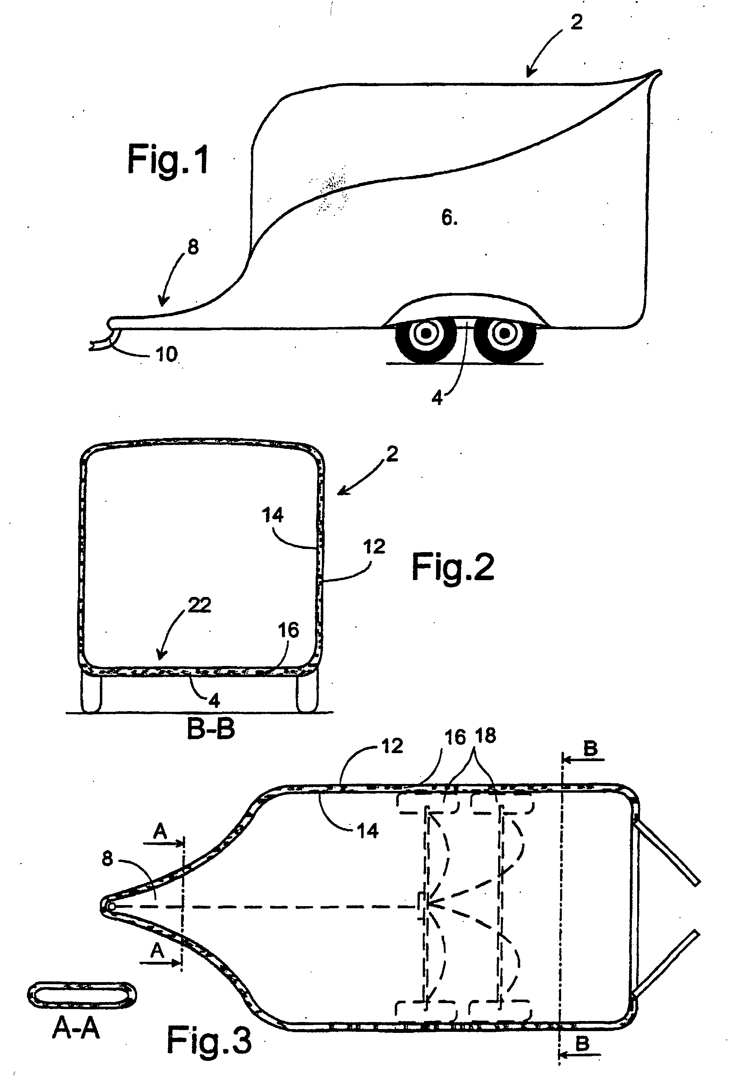

Fig. 1 shows a trailer 2 constructed in accordance with the invention, where the under-carriage/bed 4, superstructure 6 and towing arrangement 8 for coupling to a standard tow-bar 10 on a vehicle are built up in one and the same construction of composite materials. As indicated, the superstructure is aerodynamic in shape, which is made possible by the configuration of the trailer as a sandwich construction according to the invention.

The sandwich construction is built up as shown in fig. 2 and fig. 3. In the example embodiment shown, the construction, which is self-supporting, consists of an outer shell 12 and an inner shell 14 which consist preferably of formed plastic or glass-fibre plates, between which a core 16 of cellular plastic is provided.

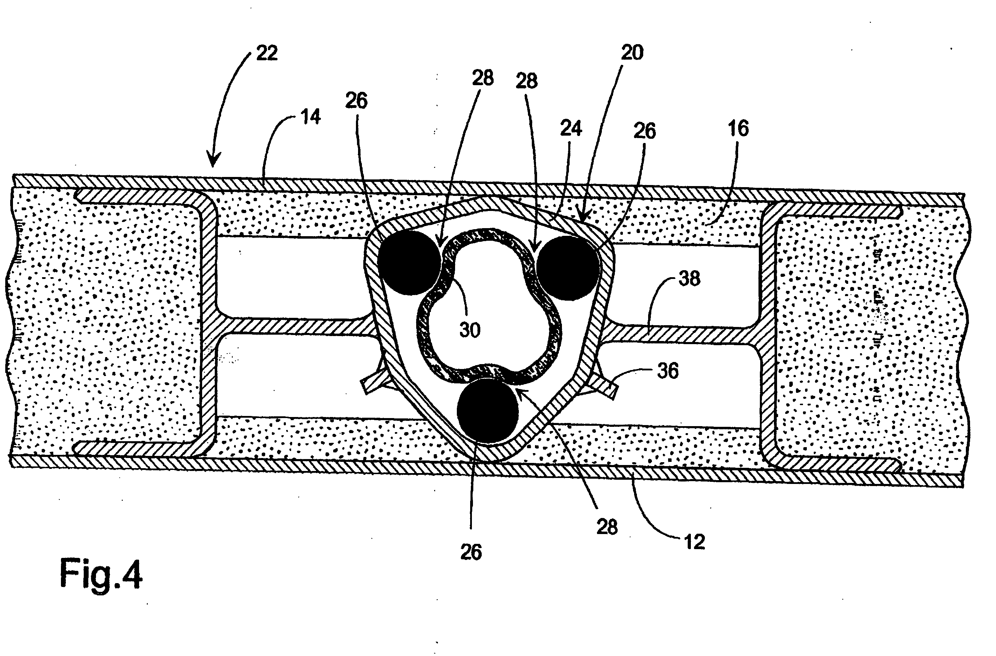

From fig. 2 and fig. 3 it will also be seen that the trailer does not have any chassis, which is possible in that the wheels 18 are placed and suspended in transverse rubber torsion springs 20 which are moulded into the bed 22 of the trailer, as shown in fig. 4. Use is hereby avoided of the traditional undercarriage, which would increase the weight of such a trailer to a considerable degree. Moreover, the use of precisely this type of suspension reinforces the loading capacity of the bed 22.

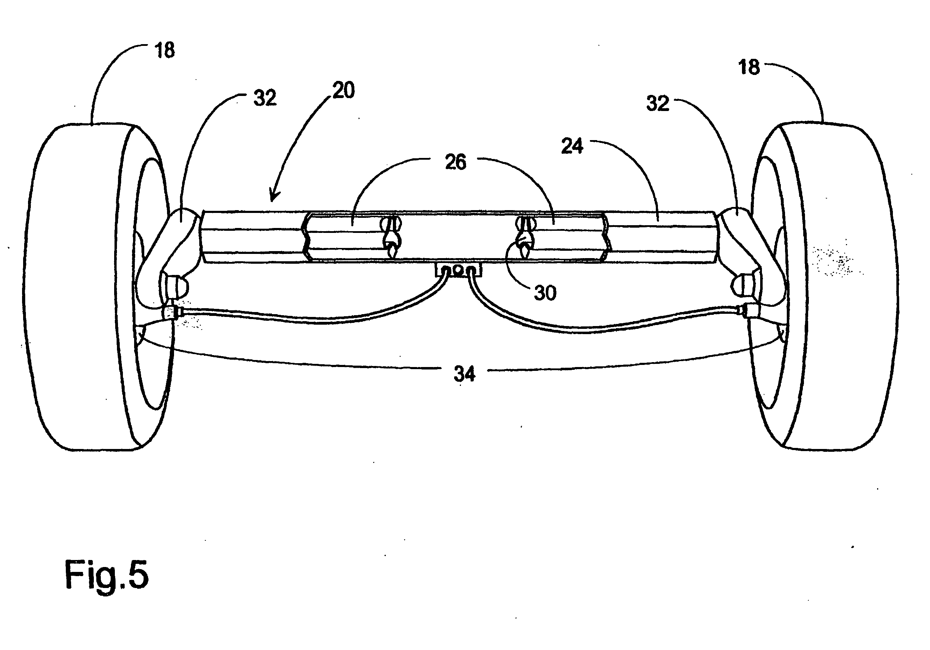

As will appear from figs. 4 and 5, the rubber torsion springs 20 comprise an outer axle tube 24 which can be made of extruded composite material, and with a non-circular cross-section inside which there are a number of longitudinal, rod-formed rubber elements 26 which are in abutment with longitudinal cavities 28 in a through-going axle support tube 30 provided with support arms 32, in the free ends of which are placed the wheels 18 with associated brake arrangement 34.

In the shown example embodiment, the outer axle tube 24 consists of a glass-fibre reinforced tube with physical characteristics which correspond to those of the sandwich construction of the bed. This is advantageous because of possible temperature variations which can arise, which could otherwise lead to the undesired formation of cracks between the cellular plastic 12 in the cavity between the outer wall 12 and the inner wall 14. In special cases, the outer axle tube 24 can be provided with parts 36, 38 which extend radially, as shown in fig. 4, with the object of distributing the torsional forces from the axle support tube 30 over a greater area within the bed 22.

With the new construction of a trailer according to the invention, the possibility is thus created for an almost revolutionary change with regard to the choice of trailer configuration. Automobile manufacturers will thus be able to extend their product range with trailers which match their various makes of cars in both shape and colour.

Moreover, the trailers will have a considerably greater loading capacity as a consequence of the combination of tare and max. weight limit, and as already mentioned it will be possible to configure said trailers more aerodynamically correct, so that the wind resistance is reduced when they are being towed. Both of these conditions will contribute towards a significantly better economy in connection with trailer transport, in that the consumption of fuel is reduced.

Furthermore, the trailer thus achieved will be almost maintenance-free, in that it does not comprise parts which, for example, can be corroded by rust, which will result in a relatively higher resale value and less load on the environment compared with trailers of the known type. Where the load on the environment is concerned, it is worthy of note that the materials used in the construction of the trailer according to the invention have a very high re-usability in connection with recycling.

## Claims

1. Trailer (2) or caravan for coupling to a towing vehicle, and comprising a superstructure (6) which comprises t at least one support surface (4) mounted on at least one set of wheels which make it mobile, and means (8) for coupling to the towing vehicle, **characterised** inthat the superstructure (6), the chassis (4) and the tow-bar/triangle (8) consist of one and the same self-supporting construction of composite materials, comprising external shells (12, 14) between which a core of suitable core material is placed.

2. Trailer (2) according to claim 1, **characterised in that** the construction consists of glass-fibre reinforced sandwich construction parts.

3. Trailer (2) according to claim 1 or 2, **characterised in that** the core material consists of cellular plastic.

4. Trailer (2) according to any of the claims 1 - 3, **characterised in that** the wheel suspensions (20) consist of a through-going axle (24) which is an integral part of the self-supporting bed (22) of the construction.

5. Trailer (2) according to claim 4, **characterised in that** the through-going axle consists of a rubber torsion-spring suspended axle (20).

6. Trailer (2) according to claim 4 or 5, **characterised in that** the through-going axle (24) or the rubber torsion-spring suspended axle (20) consists of a tube made of extruded composite material.

7. Trailer (2) according to any of the claims 1- 6 and comprising a brake system, **characterised in that** the towing and/or the pressure connections between the coupling link and brake mechanism are configured as rod connections consisting of a suitable composite material and led through channels which similarly consist of suitable composite material.

## Patentansprüche

1. Anhänger (2) oder Wohnwagen zum Ankuppeln an ein ziehendes Fahrzeug und umfassend einen Überbau (6), der mindestens eine Stützoberfläche (4) umfasst, die an mindestens einem Paar Rädern montiert ist, die ihn Mobilität verleihen, und Mitteln (8) zum Ankuppeln an das ziehende Fahrzeug, **dadurch gekennzeichnet, dass** der Überbau (6), das Chassis (4) und die Anhängerkupplung/das Dreieck (8) aus einer und derselben freitragende Konstruktion aus Kompositmaterialien bestehen, die äußere Schalen (12,14) zwischen denen ein Kern aus passendem Kernmaterial angebracht worden ist, umfassen.

2. Anhänger (2) gemäß Anspruch 1, **dadurch gekennzeichnet, dass** die Konstruktion aus glasfaserverstärkten Sandwichkonstruktionsteilen besteht.

3. Anhänger (2) gemäß Anspruch 1 oder 2, **dadurch gekennzeichnet, dass** das Kernmaterial aus zellenförmigem Plastik besteht.

4. Anhänger (2) gemäß jedem der Ansprüchen 1-3, **dadurch gekennzeichnet, dass** die Radaufhängungen (20) aus einer durchgehenden Achse (24) bestehen, die einen integralen Teil des freitragenden Bettes (22) der Konstruktion ausmacht.

5. Anhänger (2) gemäß Anspruch 4, **dadurch gekennzeichnet, dass** die durchgehende Achse aus einer in einem Drehungsfeder aufgehängten Gummiachse (20) besteht.

6. Anhänger (2) gemäß Anspruch 4 oder 5, **dadurch gekennzeichnet, dass** die durchgehende Achse (24) oder die in einem Drehungsfeder aufgehängten Gummiachse (20) aus einem Rohr aus extrudiertem Kompositmaterial besteht.

7. Anhänger (2) gemäß jedem der Ansprüchen 1-6 und umfassend ein Bremssystem, **dadurch gekennzeichnet, dass** die Zieh- und/oder Pressverbindungen zwischen dem Kupplungsglied und dem Bremsmechanismus als Stangenverbindungen konfiguriert sind, die aus passendem Kompositmaterial bestehen und durch Kanäle, die gleichfalls aus passendem Kompositmaterial bestehen, geleitet werden.

## Revendications

1. Remorque (2) ou caravane à rattacher à un véhicule tracteur, et comprenant une superstructure (6) comportant au moins une surface de support (4) montée sur au moins une paire de roues qui la rend mobile, et des organes (8) à rattacher à un véhicule tracteur, **caractérisée en ce que** la superstructure (6), le châssis (4) et le timon/triangle (8) sont composés d'une seule construction autoportante de matériau composite, comprenant des enveloppes extérieures (12, 14) entre lesquelles un noyau de matériau de noyau approprié est arrangé.

2. Remorque (2) selon la revendication 1, **caractérisée en ce que** la construction est composée de pièces de construction sandwich renforcées de fibres de verre.

3. Remorque (2) selon la revendication 1 ou 2, **caractérisée en ce que** le matériau de noyau est composé de plastique cellulaire.

4. Remorque (2) selon l'une quelconque des revendications 1-3, **caractérisée en ce que** les suspensions de roues (20) sont constituées d'un arbre traversant (24) qui est une pièce integrale du châssis autoportant (22) de la construction.

5. Remorque (2) selon la revendication 4, **caractérisée en ce que** l'arbre traversant est composé d'un arbre suspendu de ressort de torsion en caoutchouc (20).

6. Remorque (2) selon la revendication 4 ou 5, **caractérisée en ce que** l'arbre traversant ou l'arbre suspendu de ressort de torsion en caoutchouc (20) est composé d'un tube fabriqué en matériau composite extrudé.

7. Remorque (2) selon l'une quelconque des revendications 1-6 et comprenant un système de freinage, **caractérisée en ce que** les liaisons de traction et/ou de pression entre l'étrier d'attelage et le mécanisme de freinage sont configurées comme liaisons de tringle composées d'un matériau composite approprié et dirigées à travers des canaux qui semblablement consiste en matériau composite approprié.
